# EUROPEAN PATENT APPLICATION

(11) **EP 2 180 072 A1**
(43) Date of publication of application: **28.04.2010**
(21) Application number: 08791748.0
(22) Date of filing: 28.07.2008
(51) Int. Cl.: C22C 29/08, B23F 21/16, C22C 1/05

(54) **CEMENTED CARBIDE MATERIAL AND TOOL**

(30) Priority: 24.08.2007 JP 2007218470
(71) Applicant: Mitsubishi Heavy Industries, Ltd., Tokyo 108-8215 (JP)
(72) Inventor: TSUNODA, Hideo, Nagasaki-shi Nagasaki 851-0392 (JP); TAJITSU, Yoichi, Nagasaki-shi Nagasaki 851-0392 (JP); KODAMA, Yukio, Ritto-shi Shiga 520-3080 (JP); KIKUCHI, Taiji, Ritto-shi Shiga 520-3080 (JP)
(74) Representative: Henkel, Feiler & Hänzel
(86) International application number: PCT/JP2008/063513
(87) International publication number: WO 2009/028288

(57) **Abstract**

An ultra hard alloy is a hard material with a high degree of toughness. Small amounts of various materials are added to achieve these properties. One such material is vanadium carbide (VC). However, a crushed carbide raw material has a large grain size, meaning the properties of a product cannot be improved uniformly.

Vanadium trioxide (V₂O₃) was substituted for a carbide as one of the structural raw materials for a material used in producing a tool such as a hob. Because vanadium trioxide is softer than vanadium carbide, it can be readily converted to fine grains in the ball mill mixing process performed during raw material preparation. As a result, the effects of the uniformly dispersed vanadium trioxide results in improved hardness for the sintered ultra hard alloy.

## Description

### Technical Field

The present invention relates to an ultra hard material that is ideal as a material for tools.

### Background Art

Tools require a combination of superior wear resistance and a high degree of toughness. Hobs, which represent typical tool products, have conventionally been made from high-speed steel, but there is now a growing tendency for a shift to ultra hard alloys that exhibit excellent wear resistance. However, of the throwaway chip materials that represent the majority of the demand for ultra hard alloys, very few materials have the toughness required for the processing typically performed using hobs.
For example, a material formed from a WC-βt-Co based ultra hard alloy has been proposed as an ultra hard material for a hob (for example, see Patent Citation 1).

Further, ultra fine grained hard alloys with reduced tungsten carbide (WC) grain sizes, and alloys containing an added second hard material have been proposed as hard alloys having excellent strength and toughness. For example, the use of vanadium carbide (VC) having an average grain size of not more than 3 µm, and preferably approximately 1 µm, as an additional hard material besides tungsten carbide (WC) has been proposed. In such a case, the VC acts in a similar manner to existing ultra hard materials, and is added for the purposes of improving the hardness, corrosion resistance, oxidation resistance and strength and the like of the material, without inhibiting the sinterability that is required for tool production processes (for example, see Patent Citation 2).
Patent Citation 1: Japanese Unexamined Patent Application, Publication No. 2001-20029
Non Patent Citation 2: Japanese Unexamined Patent Application, Publication No. Hei 7-138690

### Disclosure of Invention

However, in recent years, the ultra fine graining of tungsten carbide (WC) has progressed considerably, and for example, reduction in the grain size to approximately 0.2 µm is now achievable. By using this type of ultra fine graining, vanadium carbide (VC) can be dispersed finely within the material structure, meaning the loss of vanadium carbide (VC) grains caused by abrasion can be suppressed to an absolute minimum, thus improving the stability and durability of the product. However, because ultra fine graining of a hard alloy increases the specific surface area of the hard material, unsatisfactory sintering properties may result, which increases the likelihood of chipping, where grains of the hard alloy are chipped off the material under usage conditions where the material is readily subjected to impacts, such as intermittent cutting conditions.
On the other hand, in the field of ultra hard materials mentioned above, vanadium carbide (VC) is known as an additive that is useful for maintaining the high hardness level of an ultra hard alloy while also improving the heat resistance. However, in the case of VC, the minimum grain size that can be achieved by grinding is currently limited to approximately 2 to 3 µm. Accordingly, in the case of an ultra hard material containing ultra fine grained WC as a main component, the grains of VC, which is added in an amount of approximately 0.5%, are approximately 10 times as large as the grain size of the WC, meaning the dispersion and distribution of the VC grains within the ultra hard material grains tend to be nonuniform.

In this manner, in conventional ultra hard materials that use VC as an additive, uniform dispersion of the comparatively large grains of VC has proven problematic, meaning the sinterability is inferior and the hardness of the product tends to vary, which can cause problems in terms of product stability.
Furthermore, in conventional ultra hard materials that use VC, because the grain size of the added VC cannot be reduced sufficiently, the number of grains distributed within the material decreases, which has been identified as causing increased variation in the cutting performance.
The present invention has been developed in light of the above circumstances, and has an object of providing an ultra hard alloy material and tool in which variations in the product hardness are suppressed, thereby providing improved product stability and durability, and which combine superior wear resistance and durability during both intermittent cutting and continuous cutting processes.

In order to achieve the above object, the present invention employs the aspects described below.
An ultra hard material according to the present invention is an ultra hard material that functions as the material for a tool such as a hob, wherein the ultra hard material comprises vanadium trioxide (V₂O₃) as one structural raw material.

In this type of ultra hard material, by using vanadium trioxide (V₂O₃) as one of the structural raw materials, vanadium trioxide (V₂O₃) can be dispersed uniformly within the ultra hard material. In other words, discovering that the grain size of vanadium trioxide (V₂O₃) was able to be readily reduced by grinding meant that the vanadium trioxide was able to be dispersed uniformly within the ultra hard material.
During mixing of all of the raw materials in a ball mill using ultra hard balls, the soft vanadium trioxide (V₂O₃) undergoes ready deformation and is dispersed uniformly.

The ultra hard material according to the present invention is an ultra hard material that functions as the material for a tool such as a hob, the ultra hard material comprising 85 to 95% by weight of hard grains, 5 to 15% by weight of Co or Ni, vanadium trioxide (V₂O₃), and unavoidable impurities.
Examples of the hard grains include WC, TiC, TiN and TaC and the like.

In this type of ultra hard material, employing vanadium trioxide (V₂O₃) means that the vanadium trioxide (V₂O₃) is dispersed uniformly within the ultra hard material, and therefore the porosity of the sintered compact obtained upon molding and sintering can be reduced. In other words, an improvement in the sintering properties yields improved hardness, and as a result, chipping can be prevented even under usage conditions such as intermittent cutting where the product is readily subjected to impact, thus yielding significant effects in terms of improved tool reliability and increased life expectancy.
Further, although the present invention places no particular limitations on the added amount of vanadium trioxide, a satisfactory improvement in the sintering properties and improved tool performance can be achieved even at addition amounts of 1% by weight or less. A preferred value for the amount of added vanadium trioxide is approximately 0.5% by weight.
During mixing of all of the raw materials in a ball mill using ultra hard balls, the metallic Co and Ni, and the soft vanadium trioxide undergo ready deformation and are dispersed uniformly.

A tool according to the present invention is produced by molding an ultra hard material according to claim 1 or 2, and then sintering the material within an inert gas atmosphere or under vacuum.
By subjecting the tool described above to a hot isostatic press treatment following sintering, internal defects within the sintered compact can be removed, thereby achieving an even higher degree of strength and improved sintering properties.

According to the present invention described above, because the V₂O₃ that represents one of the structural materials is dispersed uniformly within the ultra hard material, the sintering properties are improved during production of a product that uses the ultra hard material, and the hardness of the product can be stabilized. Accordingly, a product produced using the ultra hard material of the present invention, for example a tool such as a hob, exhibits no variation in hardness and offers improved stability and durability.
In other words, the uniform dispersion of the vanadium trioxide improves the sintering properties during molding and sintering, thus increasing the hardness and dramatically improving the cutting performance and wear resistance of the tool. Moreover, the problem of variation in the cutting performance (namely, the stability during intermittent or continuous cutting) that tends to arise when VC is added can be largely ameliorated by the uniform dispersion of vanadium trioxide.

### Brief Description of Drawings

[FIG. 1] A schematic illustration of the structure of an ultra hard material according to the present invention.
[FIG. 2] A schematic illustration of the structural state of a conventional ultra hard material following molding.
[FIG. 3] A test flowchart for producing an ultra hard alloy (tool) using an ultra hard material.
[FIG. 4] A table detailing test results.
[FIG. 5] A diagram illustrating cutting test results.

### Best Mode for Carrying Out the Invention

Embodiments of the ultra hard material and tool according to the present invention are described below based on the drawings.

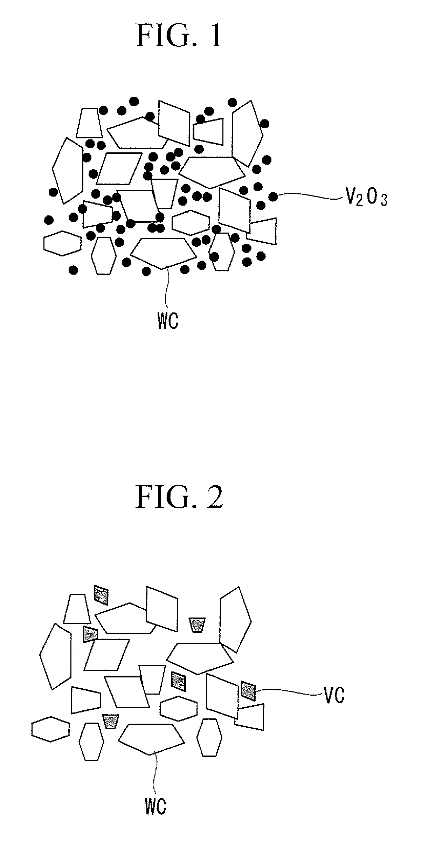

FIG. 1 and FIG. 2 are schematic illustrations of structural states following molding in an ultra hard material according to the present invention and a conventional ultra hard material respectively.
The ultra hard material illustrated in FIG. 1 is an ultra hard material that functions as the material for a tool such as a hob, wherein the ultra hard material comprises 85 to 95% by weight of WC having a grain size within a range from 0.3 to 5 µm, 5 to 15% by weight of Co or Ni, not more than 1% by weight of vanadium trioxide (V₂O₃), and unavoidable impurities. Moreover, although a small amount of C is incorporated together with the structural materials, from the viewpoint of preventing oxidation during sintering, 0.2 to 0.5% by weight of C is preferably intentionally added to the material.

In contrast, the ultra hard material illustrated in FIG. 2 uses large grain size vanadium carbide (VC) instead of the V₂O₃.

In other words, as illustrated in FIG. 1, by using vanadium trioxide that is soft and readily ground into fine grains, the ultra hard material of the present invention adopts a structure in which the vanadium trioxide (V₂O₃) is incorporated between the fine grains of WC having grains sizes within a range from 0.3 to 5 µm.
Because this V₂O₃ is readily ground into fine grains, the V₂O₃ can be dispersed uniformly within the ultra hard material which is composed mainly of fine grains of WC with small grain sizes of 0.3 to 5 µm.
An ultra hard material in which the V₂O₃ is dispersed uniformly in this manner exhibits improved sintering properties, meaning a more stable level of hardness can be obtained due to reduced pores and an improved average hardness, and as a result, a tool (product) such as a hob that uses this ultra hard material exhibits improved cutting performance and stability.

As mentioned above, VC is reported as being effective in improving the high-temperature strength and hardness of ultra hard alloys, but because carbide raw materials cannot be ground particularly finely, and are therefore distributed non-uniformly within the alloy, achieving the above effects is difficult in the case of ultra hard alloys composed of raw materials with very fine grain sizes.
Further, the most commonly known oxide of vanadium is vanadium pentoxide, which has a melting point of 690°C. Accordingly, this vanadium pentoxide melts prior to sintering, making sintered molding impossible.

In contrast, V₂O₃ has a melting point of 1,970°C, and therefore does not melt even at the maximum temperature of 1,400°C used during ultra hard alloy production. Furthermore, V₂O₃ is stable and does not dissolve in solvents, and can therefore be crushed readily and distributed uniformly during preparation of the ultra hard alloy raw material, thereby improving the sintering properties and increasing the hardness.
Accordingly, by employing V₂O₃ as one of the structural materials of an ultra hard material, V can be dispersed uniformly within an ultra fine grained WC raw material, and a tool such as a hob produced by molding the resulting ultra hard material, performing vacuum sintering, and then performing a hot isostatic press treatment exhibits improved durability of the cutting edge.

In order to confirm the operation and effect of the V₂O₃ described above, the following tests were performed.

### <Test Method>

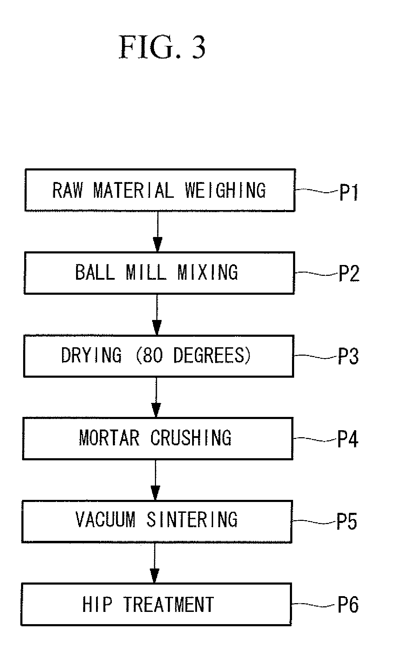

The ultra hard alloy was produced by sintering an ultra hard material prepared by adding powdered metallic Co (cobalt) to a hard powder containing WC (tungsten carbide) as the main component.
As illustrated in FIG. 3, this production method comprises, in sequence from the start, a raw material weighing process P1, a ball mill mixing process P2, a drying process P3, a mortar crushing process P4, a vacuum sintering (80°C) process P5, and an HIP (Hot Isostatic Press) treatment process P6.

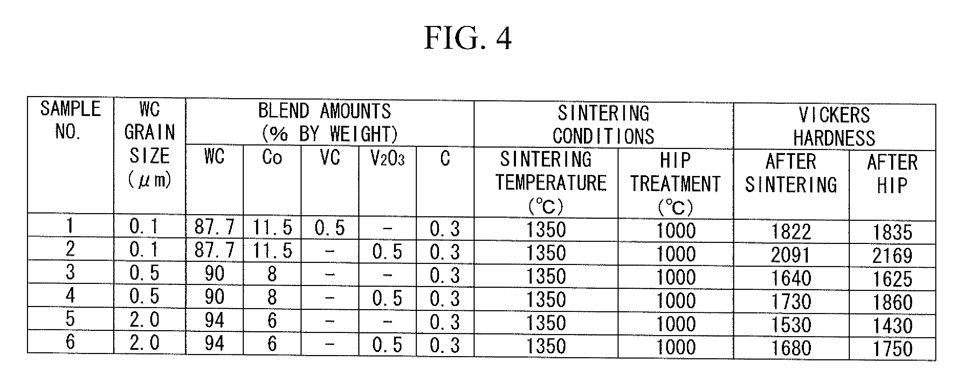

In the initial raw material weighing process P1, the raw materials are weighed so as to achieve a predetermined blend (units: % by weight). The raw materials used in this process are WC, Co, VC or V₂O₃, and C. As detailed in FIG. 4, a plurality of raw materials were used in these tests, comprising 87.7% by weight, 90% by weight or 94% by weight of WC, 0.3% by weight of C, and 11.5% by weight, 8% by weight or 6% by weight of Co.
In the subsequent ball mill mixing process P2, a pot containing the weighed raw materials combined with alcohol as a dispersant, an organic binder (PVP) for improving the shape retention properties following molding, and ultra hard balls that act as the grinding media is subjected to mixing using a ball mill, thus forming a uniform mixture. This mixing using a ball mall is performed using ultra hard balls of diameter 9.5 mm, by continuously rotating the mill at a rotation rate of 70 rpm for one week.

In the subsequent drying step P3, the raw material that has been mixed in the manner described above is dried in an atmosphere at 80°C.
Following drying, the raw material is subjected to crushing and granulation with a mortar in the mortar crushing process P4. The drying and granulation represent laboratory level techniques, and in an industrial setting, a spray dryer is used.
In the subsequent vacuum sintering process P5, the granulated raw material is molded into a molded item (a chip test piece) of a predetermined shape via a die molding or CIP (Cold Isostatic Press) treatment. Subsequently, this molded item is placed inside a vacuum degreasing furnace and subjected to degreasing under vacuum at a temperature of 750°C for 3 hours, thus forming a pre-sintered preform having a strength similar to that of chalk. In this test, molding was performed using a die press so that the shape of the molded item following sintering had a substantially rectangular cross-section with dimensions of 15 mm × 15 mm.
Sintering was performed using a vacuum sintering furnace, by holding the pre-sintered preform at a temperature of 1,350°C for 1 hour. In this test, the temperature inside the furnace was raised to 1,350°C over a period of approximately 3 hours, and this sintering temperature was then maintained for 1 hour before the furnace was allowed to cool.

Finally, in the HIP treatment process P6, a high-temperature high-pressure treatment is performed, thereby removing internal defects within the sintered compact and achieving a further increase in strength. In other words, at the stage immediately following vacuum sintering, because very fine pores tend to remain within the sintered compact, causing a deterioration in the physical properties of the sintered compact, an HIP treatment is performed in an argon gas atmosphere. In this test, the conditions for the HIP treatment are listed below.
- Furnace internal temperature: first repetition at 1,000°C, second repetition at 1,180°C
- Furnace internal pressure: 98 MPa
- Holding time: 1 hour

The purpose of this test is to compare the properties of an ultra hard alloy containing V₂O₃ as an additive with the properties of a characteristic ultra fine grained ultra hard alloy containing VC as an additive.
In other words, VC is reported to improve cutting performance when added as very fine grains, but being a carbide, is a very hard compound that is difficult to disperse uniformly. Accordingly, this test is designed to test the effectiveness, as a potential alternative to VC, of V₂O₃, which is the only oxide among the plurality of different vanadium oxides that has a high enough melting point to prevent melting from occurring at the pre-sintering stage.
Furthermore, because V₂O₃ is soft, unlike a carbide, it can be dispersed uniformly during the powder preparation process performed using the ball mill.

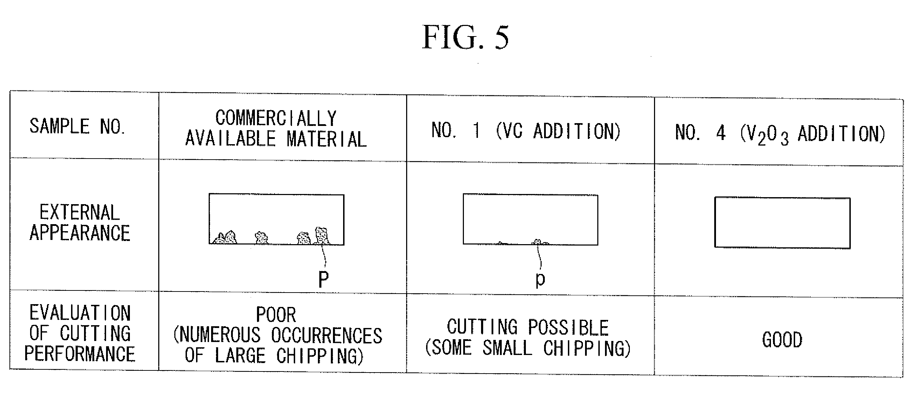

The results of this test are summarized in FIG. 4 and FIG. 5.
FIG. 4 is a table detailing the blend amounts and the sintered compact properties for 6 different ultra hard materials according to the present invention (samples No. 1 to 6).
In these tests, three types of WC having different grain sizes (0.1 µm, 0.5 µm, and 2.0 µm) were used in preparing the ultra hard test materials. With these test materials, because the specific surface area was larger for the materials having a smaller WC grain size, the amount of Co was reduced as the WC grain size increased.

Furthermore, within the test materials prepared for these tests, a test material with V₂O₃ and a test material without V₂O₃ was prepared at each WC grain size. Moreover, for the test materials having a WC grain size of 0.1 µm, a test material (sample No. 1) was prepared that contained added VC instead of V₂O₃. The sintering conditions and HIP treatment conditions were the same for each test material.

In other words, sample No. 1 and sample No. 2 were prepared to enable a comparison between VC addition, which is typically employed to improve the cutting performance and durability, and the V₂O₃ addition according to the present invention. Furthermore, sample No. 3 to sample No. 6 were prepared to compare the effect of a WC powdered raw material of larger grain size in the presence or absence of added V₂O₃.
From the results listed in FIG. 4 it is evident that regardless of the WC grain size, the addition of V₂O₃ yields an increase in the hardness of the sintered compact.

FIG. 5 illustrates the results of cutting tests conducted using test pieces prepared by cutting the test materials detailed in FIG. 4 into hob shapes, and represents a side view of the cutting edge (the flank face), viewed under a microscope, following a cutting test.
A hob tool is a tool that is used for producing gears and the like. In this cutting test, the various different test materials were used to prepare single blade test pieces T1 to T3, each comprising a blade cut in a triangular shape. These single blade test pieces T1 to T3 have the same shape as a single tooth of a hob, which is a gear-shaped tool used for cutting a cylindrical gear used in a transmission or the like, and because they have this type of shape, are referred to as "single blade test pieces".

Using these single blade test pieces T1 to T3 prepared from the different test materials, a cutting test in which a helical groove was cut continuously into a round bar was conducted once for each single blade test piece (a total of 3 repetitions). The single blade test piece T1 was a commercially available material, the single blade test piece T2 was the sample No. 1 containing added VC, and the single blade test piece T3 was the sample No. 4 containing added V₂O₃.
For each of the single blade test pieces T1 to T3, the state of the cutting edge following the cutting test was inspected under a microscope. From the results of these observations it was clear that in the case of the commercially available material, the cutting edge, which is also known as the flank face, had developed numerous occurrences of comparatively large chipping P. In contrast, in the sample No. 1 containing added VC, the scale of the chipping p was smaller, and the number of chipping occurrences was also considerably lower. Moreover, in the sample No. 4 that represents the present invention, the addition of vanadium trioxide (V₂O₃) meant that although the side surface had roughened slightly, no chipping of the cutting edge had occurred.

In this manner, because the present invention enables vanadium trioxide (V₂O₃) to be uniformly dispersed within an ultra hard material, the sintering properties are improved during production of a product that uses the ultra hard material, enabling the hardness of the product to be stabilized. Accordingly, a tool such as a hob produced using the ultra hard material of the present invention suffers no variation in hardness, and exhibits improved levels of stability and durability.
The present invention is not limited to the embodiments described above, and various modifications are possible without departing from the scope of the present invention.

## Claims

1. An ultra hard material that functions as a material for a tool such as a hob, wherein
the ultra hard material comprises vanadium trioxide (V₂O₃) as one structural raw material.

2. An ultra hard material that functions as a material for a tool such as a hob, the ultra hard material comprising:
85 to 95% by weight of hard grains,
5 to 15% by weight of Co or Ni,
vanadium trioxide (V₂O₃), and
unavoidable impurities.

3. A tool, produced by molding an ultra hard material according to claim 1 or 2, and sintering the ultra hard material within an inert gas atmosphere or under vacuum.
